# EUROPEAN PATENT SPECIFICATION

(11) **EP 0 767 876 B1**
(45) Date of publication and mention of the grant of the patent: **28.02.2001**
(21) Application number: 95923202.6
(22) Date of filing: 26.06.1995
(51) Int. Cl.: F03B 13/22

(54) **OFFSHORE WIND-/WAVE-ENERGY CONVERTER**
OFFSHORE WIND/WELLEN-ENERGIE-UMFORMER
CONVERTISSEUR DE L'ENERGIE DU VENT/DES VAGUES EN HAUTE MER

(30) Priority: 28.06.1994 DK 76694
(43) Date of publication of application: 16.04.1997
(73) Proprietor: Friis-Madsen, erik, 2660 Brondby Strand (DK)
(72) Inventor: Friis-Madsen, erik, 2660 Brondby Strand (DK)
(86) International application number: DK9500267
(87) International publication number: WO9600848

(56) References cited:
- WO-A-93/09347
- DE-C- 2 648 318
- FR-A- 2 548 738
- GB-A- 2 196 697

## Description

The invention relates to a plant for the exploitation of wind/wave energy on the high seas. It consists of a floating self-adjusting platform, anchored towards the waves by means of hawsers connected to a floating pontoon, which is in turn anchored to one or several anchor blocks on the sea floor. A possible power cable can be led through a swivel link on the pontoon. The platform is equipped with two wave reflectors (2) for deflection and focusing of waves. The deflected waves are focused against the front of the platform which is equipped with a doubly curved ramp upon which the waves travel and spill water into a reservoir which has a variable water level compared to the average sea level, and from which the sea water is led back to the sea through pipes in which power transforming machinery is installed.

The two internally mirrored wave reflectors are designed as floating curved stiff, thereby self-stabilizing pontoons of considerable length, compared to the width and height of any cross section, and they are equipped with means of fixing fenders and hawsers, in such a way that they can be kept in the desired position compared to the platform.

There are other known wave-driven plants of a related type such as the PCT/DK91/00329 - WO 93/09347. The Swedish company Sea Power AB has likewise developed a floating platform, where the waves travel up an inclined plane into a reservoir from where the water is led back to the sea through a turbine.

The principle in which waves are guided up a ramp is also known from a plant in Norway called TAPCHAN. This plant is the only type of large scale wave energy exploitation plant which has promised a sufficiently long lifetime with stabile power production, that there is sufficient basis for a reliable estimate of the price of the electricity produced. The TAPCHAN plant is built on a rocky coast and consists primarily of a tapered channel, in which the wave energy is concentrated. When the waves travel up the narrowing and rising channel they increase in height, but are reduced in width, after which the water spills over into a reservoir whose water level is up to 3 m above average sea level. The water is led back to the sea through a conventional water power station with a Kaplan turbine which powers a 350 kW asynchronous generator. The plant has turned out to be reliable, but can obviously only produce electricity at certain wave directions. Furthermore, the electrical production at a given wave height is dependent on the tide level.

The plant according to the presented invention is unusual in being an offshore wave energy converter which can be installed on all bodies of water that have a depth from approximately 10 m to more than 300 m, and which exploits the wave energy in a way, that is most alike the TAPCHAN plant, as it is able to focus wave energy and guide wave crests into a basin from which the water can be led back to the sea. As a result of this, the energy can be utilized in a number of low head turbines where the hydraulic pressure and flow is converted to electric power. Besides being a floating construction, this plant is very different from the TAPCHAN plant in its geometrical design as well:

The ramp of the platform is designed as a doubly curved surface, which coupled with the likewise curved wave reflectors results in the fact that a wave moving towards the plant will arrive to the platform in such a way, that a relative long amount of time will pass from when a crest hits the central part of the plant until the last part of the reflected wave reaches the wave catcher elements farthest away. The result of this is primarily that the water supply to the reservoir is evened, but also that the plant's movement on the sea is dampened, and finally that the forces acting on the construction parts are reduced.

Furthermore the fact that the curving of the ramp also in a vertical plane is convex results in a highly effective conversion of the waves' kinetic energy to potential energy. This is due to the fact that the run-up of the waves to the reservoir only causes minor breaking and reflection of the waves for all wave heights because the water meets a slope with an evenly decreasing inclination as it travels up the ramp to the basin. Finally it should be mentioned that the plant has substantial strength advantages in that the platform's ramp is shaped as a doubly curved surface.

The plant is a relatively large and heavy construction, as the width of the platform should be more than the average wavelength on the anchorage site; a preferred example of design of the plant is therefore to make the platform in reinforced concrete. To reach the necessary good economy in a renewable energy plant built according to the invention, it will be necessary for the plant to have a long lifetime and small maintenance costs - for example, a life-expectancy of 50 years can be obtained with the use of already existing materials and methods of construction.

Besides the ability to resist all types of weather that can be expected in the design period for the plant, it is necessary that the plant can utilize a substantial part of the wave energy resource. This is obtained by anchoring the plant in such a way that it always sways to receive waves from the predominant direction. This means that the plant always receives the largest possible amount of wave energy in the prevalent wave climate. At the same time, the amount of energy led to the plant's basin is maximized by adjusting the floating height of the platform. Before a wave crest reaches the plant's ramp, the energy has been significantly concentrated by reflection from the wave reflectors. When the concentrated wave hits the ramp, a substantial part of the wave energy is converted from a mixture of potential and kinetic energy to pure potential energy as part of the wave crest spills over into the plant's basin. During the process of conversion, there are energy losses that manifest themselves in the following ways:

Wave movements of a certain size exist to the rear of the plant. There is a certain reflection from the ramp and finally there is a certain amount of wave breakage along the wave reflectors and on the platform itself.

The efficiency in the converting process is greatly dependent on the height of the waves, as all of the losses of efficiency mentioned above will increase in proportion to the height of the waves. However, the doubly curved design of the ramp in connection with its variable height over the average sea level results in a energy conversion that has a high degree of efficiency in all wave heights up to the significant wave height for which the plant is designed to produce maximum power. In wave heights that exceed the design height the plant will have a constant power production, which means that its efficiency of cause decreases greatly in large waves.

In large waves the floating height of the platform will be at its maximum value, as the amount of water in the ballast tanks is kept on the minimum level in such weather conditions. Thus the stabilizing effect of the surrounding masses of water as well as the weight of the platform itself are at its minimum in harsh weather conditions. The result of this is, that the plant starts to ride the waves to a substantial degree - that is to follow the motion of the surface - on the high and thereby relative long waves.

The energy loss due to the deflection of the wave energy by means of a wave reflector will be the lowest possible when the wave reflector is lying still in the water and when the waves hit the reflector at a relatively acute angle. At the same time with regards to the construction economy, it is important that the forces on the wave reflector's moorings and on the wave reflector itself become small in comparison to the forces that can be seen on the moorings of ships, barges and other floating constructions such as pontoon-bridges.

These qualities are obtained because the wave reflector in a horizontal plane as a whole or in sections is part of a conic section. Furthermore, its front is vertical and of a rising height over the water line in the direction in which the waves predominantly move along the wave reflector whilst the rear side is made with a chamfered edge. The wave reflector is furthermore equipped with stabilizers in the form of a keelsheet supported by shored up sheets, which mean that movement of the wave reflector caused by waves hitting the front of the reflector in the prevailing direction of movement will be damped to a high degree on the grounds of the hydrodynamical added masses of water, acting transversally as well as alongside the wave reflector.

The height of the wave reflector over the water line as well as the maximal floating height of the platform itself should be adapted to the wave climate in which the plant is designed. This means that in the case of wave heights above the design value, the wave reflectors will be flooded. This effect and the above described riding of the platform when the wave lengths are large mean that the forces that act upon the construction and thereby also upon the anchoring system do not rise significantly when the wave heights exceed the wave height where the plant reaches its maximum effect.

The plant is designed in such a way, that the platform can be brought to float at a level so low, that the top parts will be at sea level. The wave reflectors can be rotated around the points of fixture on the platform and be brought in a position such that the wave energy instead of concentrating towards the platform, will spread away from it. Such a lowering of the platform with a simultaneous rotation of the wave reflectors can be used when parts of the machinery on the platform are failing and in extreme weather conditions. When undertaking maintenance on the plant, the platform is raised to the highest floating position, and if necessary, the wave reflectors are rotated to minimize the plants movements upon the sea.

A preferred design of the plant according to the invention is characterized by the contour lines of the ramp and/or the curves with the largest drop towards a horizontal plane being parts of conic sections. Apart from the previously explained advantages of designing the ramp as a doubly curved surface, it should be emphasized that there are, with regards to strength as well as practical construction work, substantial advantages to gain in designing the ramp in such a way that the horizontal curves are concentric circle sections and that the curves with the largest drop are parts of ellipsoids.

Another preferred design of the plant according to the invention is characterized by the ramp being constructed by joining together a relatively large number of exactly identical sections. Each of which is designed as a single curved surface. In this way, the horizontal curves can be sections of regular polygons whose circumscribed/inscribed circles have the same center, whereby a rational and simple production of the ramp can be obtained.

By designing the platform in such a way that the ballast tanks are divided into cells by means of bulkheads and ribs and by using perforated plates as bottom plates in the ballast tanks, the possibility of adjusting the floating level of the platform by changing the air pressure in the ballast tanks exists, as the water can float freely through the holes in the bottom-plates. This leads furthermore to an increase in the strength and stiffness of the construction, and dampening the movement of the plant on the sea, partly because the water in the tanks only has limited freedom of movement in a horizontal direction - partly because the force that acts on the platform's bottom plate and a variation of this as a result of varying pressure generated by the waves is diminished. Due to the fact that the pressure in the air-filled sections of the ballast tanks under normal conditions will be higher than the atmospheric pressure, there will be a reduction of the resulting forces acting on the parts of the platform which are directly in contact with the waves.

It would be appropriate to place detectors for registration of heights, frequencies and speeds of the incoming waves on the plant's anchor pontoon and/or on the anchor block. With the proper automation for adjusting the air pressure in the ballast tanks and the number in use and/or the effect of the power converting machines on the platform, the efficiency of the plant could hereby be optimized with regards to the actual wave climate. It should be noticed, that such an adjustment of the plant's operating parameters neither could or should happen so fast that there would be significant changes over a single wave period. Since waves often travel in groups, which move at a significantly lower speed than the waves themselves, it would be practically possible to change the operating parameters significantly within a period corresponding to the speed of the wave groups. It should be mentioned that a rather common time-distance between wave groups is approximately 1 minute. The effect of such automation is primarily that it ensures there always will be water in the platform's basin. Thus there will be a higher efficiency of the plant and only minor fluctuations in the power production. The strategy for the regulation is as follows:

A relatively large amount of water will be retained in the basin when only small wave trains are registered to be heading towards the ramp. Besides ensuring the basin against a complete emptying, this will also contribute to a lowering of the platform's floating height, which in turn will increase the water supply to the basin. When on the other hand, a large group of waves approach the ramp, an increased turbine capacity is brought into action prior to this, leading to a nearly empty basin and a raising of the platform. It is hereby ensured that the basin will not overflow and thus that the increased wave power effect can be fully used.

The wave reflectors are crucial for the production and the stability of the wave power plant. The reflectors focus waves towards the doubly curved ramp, which obviously increases the supply of water to the basin.

It is an almost equally important function of the reflectors that they cause an equalization of the water supply because the reflected waves travel a longer distance towards the ramp than the waves directly hitting it. This way an even load for the turbines is achieved together with a high efficiency due to the dampening of the platforms movements upon the waves. Finally the reflectors act as an important element in the anchor system for the platform, because they are fixated to the platform's side pontoons by means of a fender arrangement consisting of one or more vertical braces for almost the entire height of the pontoon. A fender element of an elastic material is mounted around the brace in such a way that the wave reflector is fixed to the pontoon. The fixed wave reflector can maintain a constant floating height without causing an exchange of vertical forces with the platform despite the floating height of the platform being variable.

A preferred design of the plant according to the invention is characterized by being supplied with machinery for the variable positioning of the wave reflectors. These reflectors can be moved by varying the draw in the connecting hawsers, for example by changing the draw in one or more wires which are lead from the platform to the connecting hawsers. At the same time this is done, the hawsers which prevent the wave reflectors from moving towards each other as a result of wave forces moving contrary to the predominant wave direction on the wave reflectors rear side are loosened.

Another preferred design of the wave power plant's platform according to the invention is characterized by the placement of windmills of type where the rotors are suspended in a so-called free yaw/tilt suspension. This means that, compared to the tower, the rotor has freedom of movement within certain limits. The power transforming machinery, such as a gearshift, electrical generator, and/or a mill-driven water-pump with exit to the platform's basin could be placed in the side pontoons. This means that the weight of the windmill nacelle will be small, thus the static and dynamic forces acting on the top of the tower will be small. Since there normally only exists a small difference between the wind direction and the existing wave direction, and since the plant moves in such fashion that the plant's symmetry axis lies in a direction between the prevailing wind and wave directions, there is no need for an actual yawing of the windmill nacelle/rotor.

The rotor's axis will not be able to completely follow the platform's movements on account of the gyroeffects. For this reason, there will have to be a large distance between the rotor planes and the tower. A suitable windmill type could be a dual-bladed mill with fixed but flexible wings (i.e. stall-regulated), which run the propeller in a directly linked propeller-pump, which in its turn lifts the sea water into the basin.

The mill will be able to function with variable rotations in certain wind velocities and can achieve a high degree of efficiency. During storms, the wings will be stowed in a horizontal position and there will therefore be no risk of direct wave influences, in spite of the relatively small tower height. The placement of windmills will also have a stabilizing effect on the plant's movements on the waves.

Windmills which are able to lift sea water into the basin will generate steadier water stream to the power generating machinery and thereby will also cause a better utilization of the installed machinery. It will be possible to vary the amount of sea water led into the basin by the wind mills by distributing the power generated from the windmills and the electrical generators. It will therefore be possible to compensate for the variation in the water supply stemming from the grouping of the waves. The calculated efficiency increase of the plant resulting from windmill placement is approximately 1/3.

The invention will be further explained in the following, with reference to the drawing showing a preferred embodiment of the invention where:
- Fig. 1: shows the general plant with windmills in plane and elevation, respectively.
- Fig. 2: is a vertical section in the symmetry plane of the plant, section I-I at fig. 1.
- Fig. 3: is a vertical section near the middle of the platform next to a turbine/generator. The platform is shown in its highest floating position,
- Fig. 4: is a vertical section near the middle of the platform. The platform is shown in its middle floating position.
- Fig. 5: is a vertical section in a wave reflector, section II-II at fig. 1.
- Fig. 6: is a vertical section in a wave reflector, section III-III at fig. 1.
- Fig. 7: is a plane section of the platform next to a side-pontoon.
- Fig. 8: is a vertical section in a side-pontoon, section IV-IV at fig. 7.
- Fig. 9: shows the general plant without windmills in plane and elevation respectively - a wave reflection pattern is marked, and
- Fig. 10: shows the general plant with windmills in plane and in 3 spatial inclined top views, respectively.

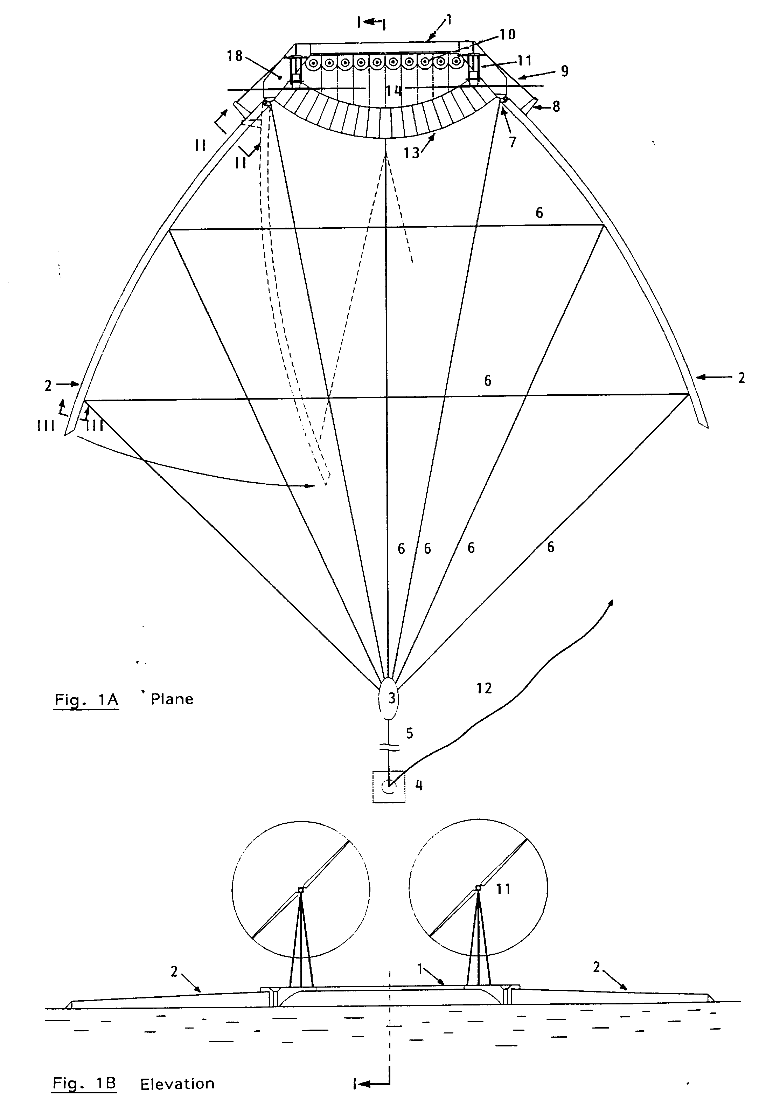

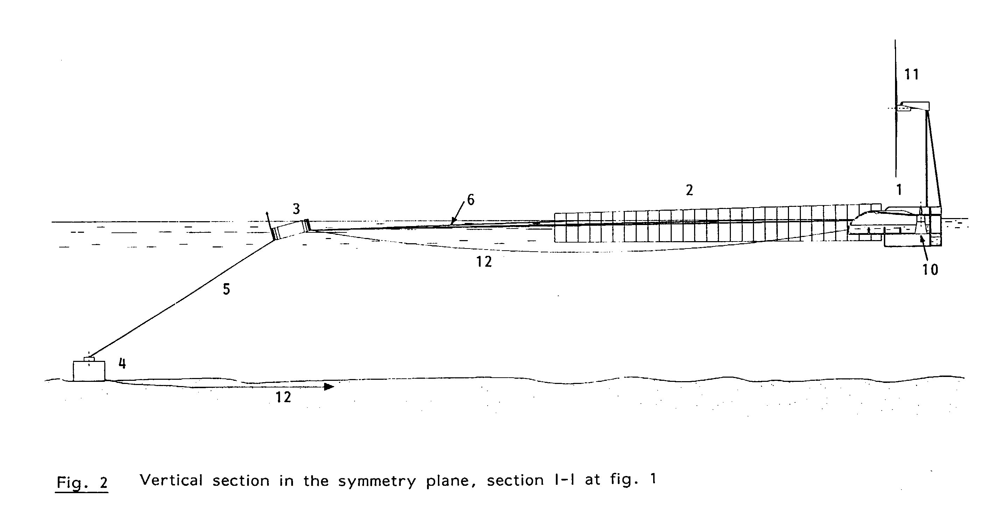

Fig. 1 shows the plant according to the general invention. Fig. 1A is a top view of the plant and fig. 1B is a direct front view of the plant. The plant is in this example provided with two windmills (11). The central part of the wave power plant is a floating platform, which is mainly made of concrete and which is marked 1. The platform and wave reflectors are connected to a floating anchor pontoon (3). The anchor pontoon is a closed body, possibly made of steel, which is filled with a buoyant material and is thereby unsinkable. The anchor pontoon is anchored to one or more anchor blocks(4) by means of chains (5) or hawsers. The anchor block is a concrete construction, that is secured to the sea floor in all conditions of weather either by a large net weight or by piling. The anchor can also be designed as a suction-anchor, which has the advantage, among other things, that it is easy to move the plant to another anchorage, if this should be necessary.

The top of the anchor block (4) can rotate freely around a vertical axis, which means, that the wave power plant is self-adjusting in accordance to the prevailing wave directions. If the plant is connected with pipes (12) or leads (12) to other installations or to the coast, these are as shown in figs. 1 or 2. The pipes/leads (12) lead from the platform (1) to the anchor pontoon (3) and from here by the anchor chain (5) to the top of the anchor block. Further pipe/lead connections run by a revolving link through the anchor block to the sea floor, where the pipe/lead (12) is sheltered under the sea floor. The anchor pontoon could also be moored to several anchor blocks. In this case the revolving link would be placed on the anchor pontoon from where the pipe/lead connections would be run vertically to the sea floor.

Fig. 2 illustrates that the anchor system allows for a certain degree of limited movement of the platform in a direction away from the anchor block. This is because the anchor pontoon (3) is pulled deeper into the water. This arrangement greatly enhances the anchor system's elasticity, which in turn strongly reduces the maximum strain on the anchor system as a whole.

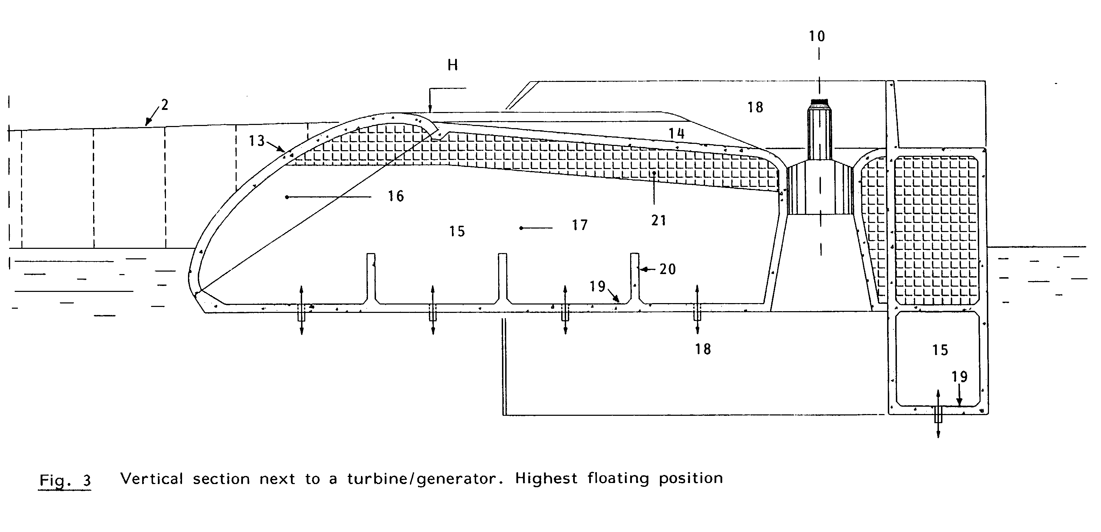

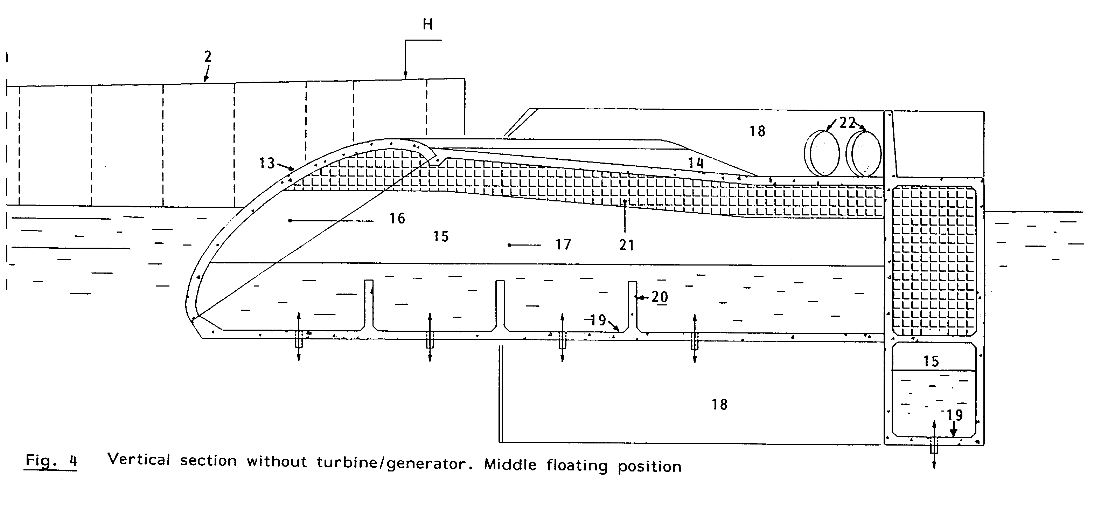

The platform (1) is, as shown at figs. 3 and 4, equipped with a ramp (13), by which waves are lead into a shallow basin (14). The basin however, has a large volume, as it is enclosed by the ramp (13), a vertical wall near the back of the platform and the two vertical walls at the side pontoons (18) of the platform. The volume of the basin is proportionate to the wave conditions at the anchoring place, so in the majority of the time, the basin is large enough to receive the entire wave flow without ever draining completely. From the basin (14) the water flow is lead back to the sea, for instance by conventional Kaplan type turbines. The turbines are for instance able to draw ordinary asynchronous electric generators. A stabile power production from the plant is achieved by using a larger number of turbines (10 for instance) coupled with correct regulation of the operation of these turbines, as shown in fig. 1. This is due to fact that the pressure of the water above the turbines can only vary in short periods according to the water depth in the shallow basin (14), which means few wave periods.

The constant filling of the basin (14) under different weather conditions is achieved by varying the floating height of the platform in accordance with the relevant wave heights. At wave heights which are equal to or larger than the designed value, the platform and thereby the basin (14) lies at the highest level, as shown at fig. 3. At lower wave heights, the platform lies lower, as shown at fig. 4. It is possible to lower the platform so much that waves with heights down to approximately 0,5 m can be used for power production.

As shown at fig. 3 and 4, the wave crests for all wave heights up to the designed heights, will hit the ramp (13) rather high up, i.e. in the zone where the buoyancy material (21) is shown under the ramp. The ramp's inclination is so small here, that there will only be minor reflection of the waves. The front of the plant is shaped in such a fashion that it allows the conversion of the wave's kinetic energy to potential energy to occur with small loss of energy, as breaking and friction against the ramp is minimized. Because a wave breaks when the wave reaches a certain water depth, the enhanced curve of the ramp's lower part causes the waves running up against the platform to meet a very abrupt slope at first and therefore they will only break in a modest degree, before hitting the upper part of the ramp. This is shown at fig. 3 and 4.

In the preferred embodiment the ramp is made of concrete consisting of 19 identical shells, which have the shape of an ellipse in a cross section analysis. The concrete elements are held together with steel cables and are clasped to the parts already in place. A high quality of concrete is used, so that the lifetime expectancy is at least 50 years, without major maintenance costs.

The shape of a wave reflector (2) is seen in the background in figs. 3 and 4. It floats at a constant height above the mean sea level, which is marked with an "H" in the two figures. The platform's floating height is variable, as the cavities (15) work as ballast tanks and they are emptied through holes in the bottom plates (19). Only a few holes are shown in the figures, but the bottom plates are made with a large number of holes, for reasons of strength and weight. Therefore constructively they will be characterized as an open rib deck with crossing ribs or a closely perforated plate.

The bottom plate is especially strongly perforated in the front part of the bottom plate i.e. the area under the ramp. The result is that the increasing pressure which appears under the bottom plate when a wave runs up against the platform, causes a relatively small lifting force at the front part of the platform, because pressure is relieved as water is pressed up through the holes in the bottom plate to the ballast tanks. Therefore the perforation of the bottom plates results in a considerable reduction of the vertical load on the platform, which in turn results in the reduction of the platform's movements on the sea. No. 16 shows a complete cavity for the full extent of the ramp. No. 17 is one of the 9 pieces of transverse concrete bulkheads from the embodiment and no. 20 is a concrete-rib shown longitudinally. The ribs are cast to the concrete-bulkheads and both ribs and bulkhead are cast to the bottom plates. The result is a very strong and stiff construction and that the ballast tanks are divided into smaller chambers, which decrease the movement of the ballast water and thereby making the platform float more steady.

The buoyancy material (21) can for instance be polystyrene foam, which does not have a propped up effect on the platform's carrying parts, or a light porous concrete, which is also able to interact constructively with the bottom of the basin (14).

The floating height is varied by changing the air pressure in the ballast tanks, in that the pressure is at its maximum when the floating-height (and thereby the forces from the waves) is high. It is obvious that emptying the ballast tanks by means of air pressure instead of the traditional way by pumping water, leads to a considerable reduction of the strain on the part of the construction which is most exposed to the waves, such as the ramp (13) and the basin's bottom (14).

Two large holes in the wall between the side-pontoon (18) and the basin (14) are seen in fig. 4.. These holes only exist if wind mills are placed on the pontoons, as the holes are outlets from the wind driven propeller pumps, which lift water up into the basin (14) and thereby increase the effect of the plant's turbines.

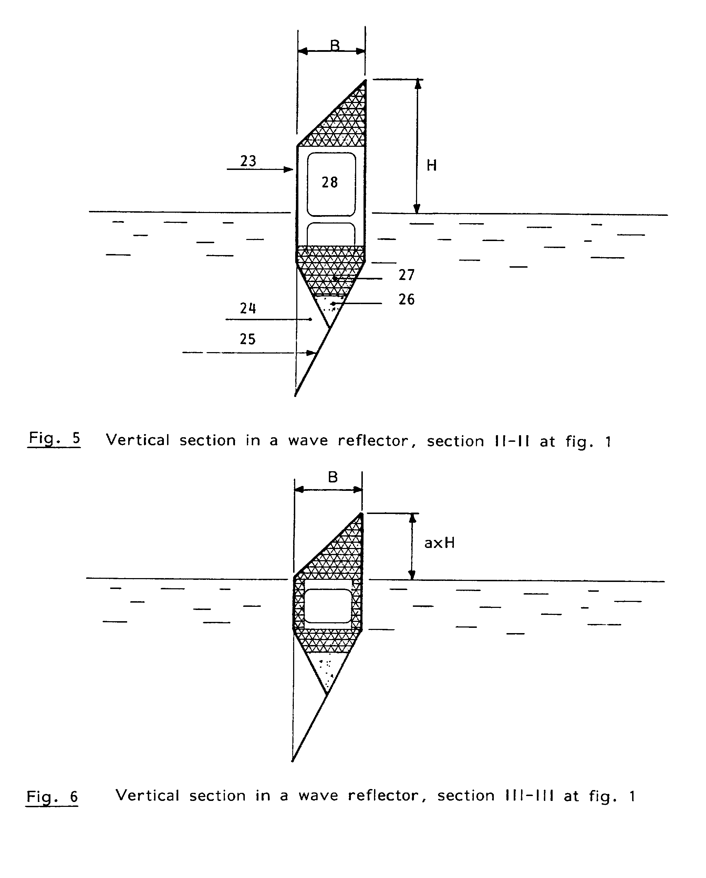

Fig. 5 and 6 show a cross section of a wave reflector. Both wave reflectors are marked "2", as these are identical, and in planal view are mirror-images of one another. The wave reflectors could be made from different materials, but are in the example predominately made of steel and are of a size that allow them to be built in most shipyard docks. Several reflectors can be built simultaneously in a dock of normal proportions.

The wave reflector is a closed construction welded by even steel plates (23) of the same type as used in ship construction. The width of the wave reflector is the same everywhere, marked with a "B" on the figures, while the height above the water line is smoothly rising from the side directed towards the waves, marked with "axH", to the height "H" in the opposite end. The essential parts of the construction are identical for the entire length of the wave reflector, facilitating a rational production of these. Steel bulkhead supports are placed at regular intervals in cavity (28), which is also shown with openings that access the inner parts for inspection and maintenance.

The side from which the waves are reflected, is vertical from the section under the water line to the top, while the back is only vertical from slightly under the water line until meeting an oblique surface from the top of the wave reflector. This geometry grants a good stiffness/strength to the cross section and the oblique cut reduces the influence from any waves which may hit the wave reflector from behind.

The keelsheet (25) gives the wave reflector great stability in case of the wave reflector moving sideways by adding a large hydrodynamic mass of water to the wave reflectors. The keelsheet is propped up by means of transverse steel ribs (24), placed against the inner steel bulkhead. In this way, greater stability against movement lengthwise is also achieved by the addition of a hydrodynamically added mass.

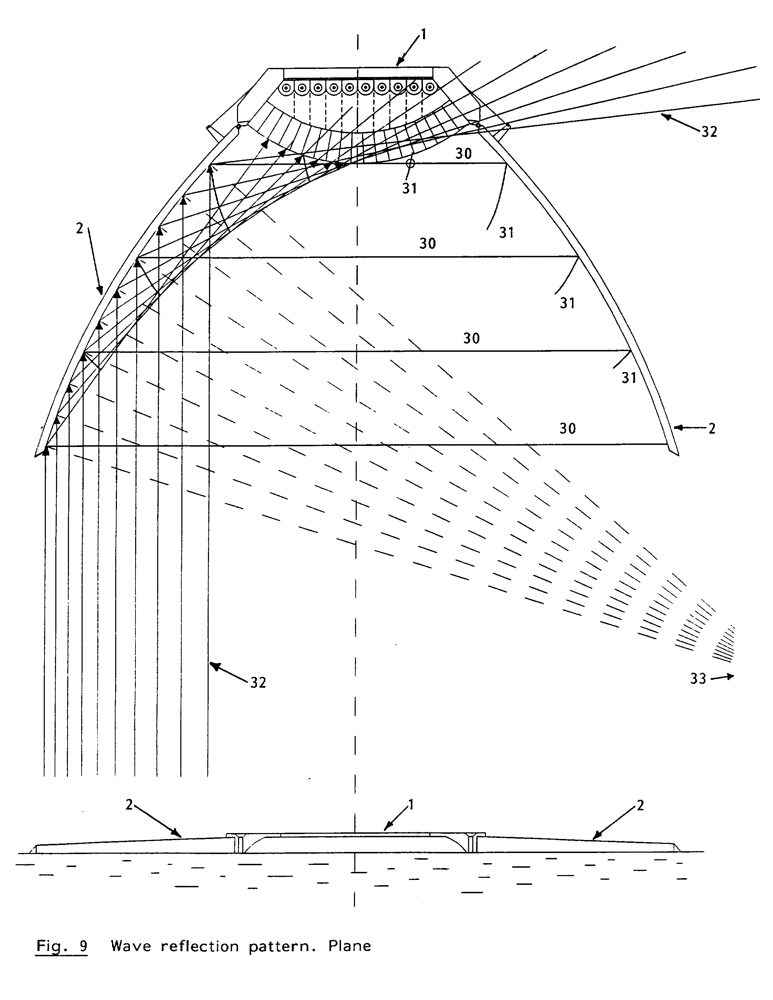

The wave reflector is provided with ballast (26) in varied quantities, as seen in the cross section. The ballast can for instance be concrete. The wave reflector achieves increased stability against rolling on the waves, because it is curved, seen from the horizontal plane, as shown in figs. 1 and 9. In the preferred embodiment a constant curve of the wave reflectors is used, which naturally has certain production-technical advantages.

Alternatively, the wave reflectors can be made as parabola-curves of a type and placement, so that, in principle, the reflected waves are focused near the middle and the top of the ramp, resulting in the reflecting waves not crossing each other. A wave reflector designed in this fashion will resemble the shown circle-curved shaped wave reflector, apart from the parabola-curved wave reflector will have a smaller curve at the tip and a larger curve near the platform. This means that the parabola-curved wave reflector has certain advantages with regards to strength vis-à-vis the circle-curved wave reflector.

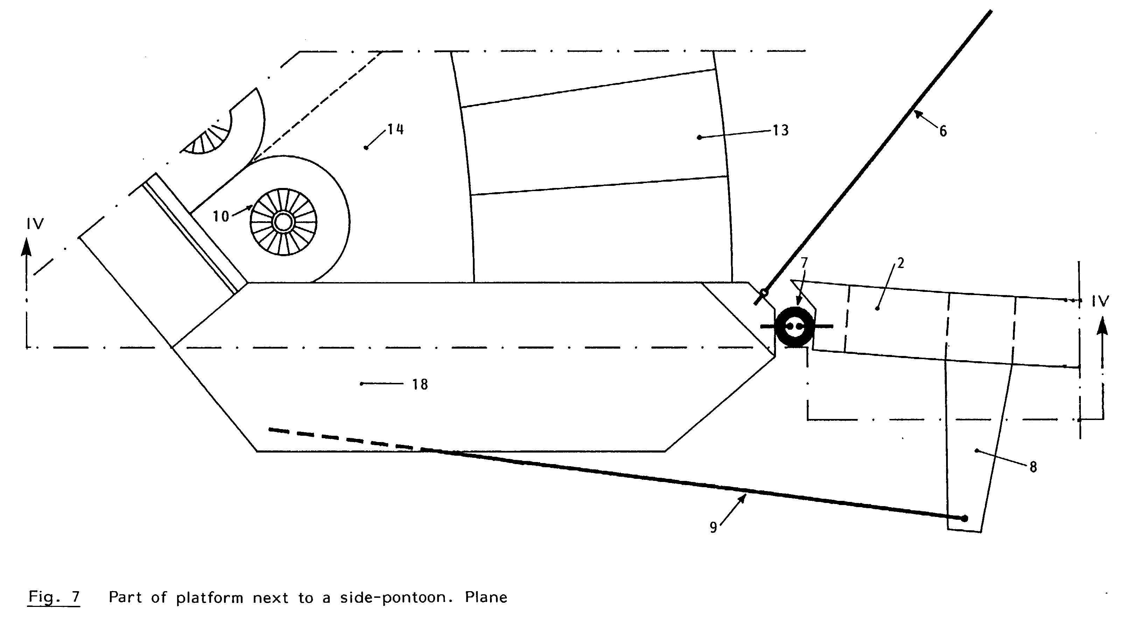

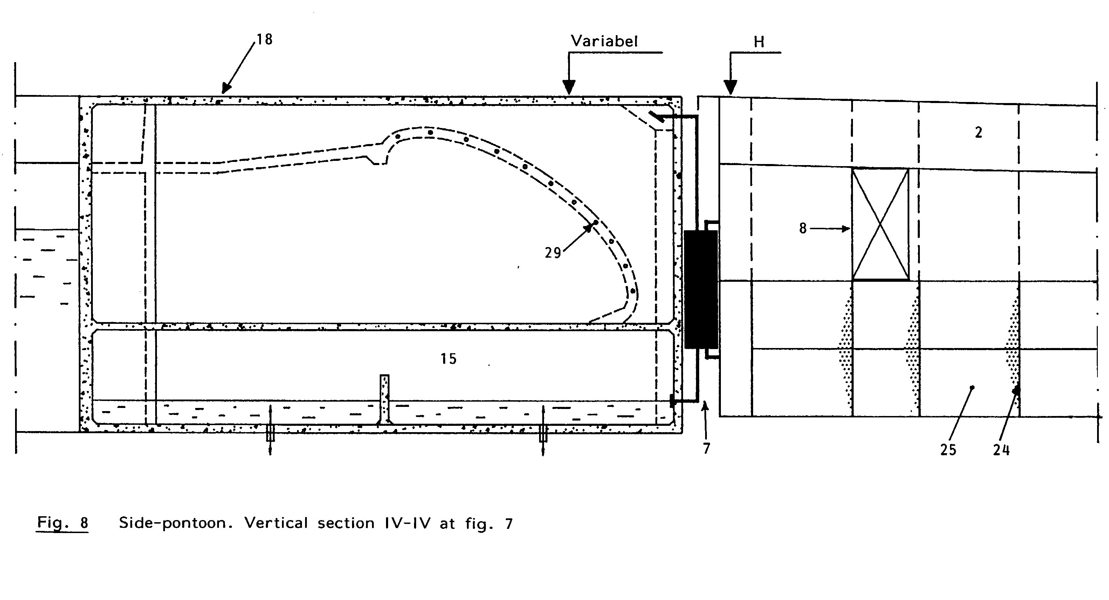

The wave reflectors are supplied with means for securing a fender arrangement (7) as shown in figs. 7 and 8. The fender arrangement is placed on the platform's side pontoon. The wave reflectors are also anchored by means of transverse hawsers, which connect the two wave reflectors. Finally, the wave reflectors are secured to the anchor pontoon (4) with hawsers, as shown in fig. 1A.

The wave reflector in the preferred embodiment is supplied with a arm (8) which is fixed to the exterior of the reflector near the fender arrangement. The arm is connected with two hawsers to a motor-driven capstan, which in turn, is placed in the platform's side pontoon (18). These capstans ensure the wave reflectors do not move against each other in case of transverse waves, hitting the wave reflector from behind. At the same time, the capstans ensure that the transverse hawsers between the wave reflectors are held constantly tight, resulting in maximizing the draw of the hawsers and thereby essentially increasing the effect of the wave reflector.

It is possible to change the draw of the connected hawsers (6) by means of an added supplementary capstan, revolving the wave reflector around the fender arrangement as the draw in the hawsers (9) is changed simultaneously.

By utilizing the supplementary capstan, it is possible to turn the wave reflector to such a degree that the opening to the waves becomes much smaller than the full opening. After a maximum turn of the wave reflector, its position will be as marked with a dot-and-dash shape in the figure.

The fender arrangement consists of one or more pipe-shaped fender element, which is mounted on the wave reflector. The fender element is made of an elastic material, and is a version of the known ordinary rubber pipe fender. The side pontoon (18) of the platform can be supplied with a vertical steel brace, which is lead through the fender element and covers almost the entire height of the pontoon, as shown in fig. 8. The floating height of the platform can in this way freely be varied without influencing the wave reflectors.

Fig. 9 illustrates the elevated front of the wave power plant, identical to fig. 1B. The only difference is the absence of windmills on the platform in fig. 9. A plan of the wave power plant is shown above the elevated front, but the entire anchoring system is left out to facilitate the illustration of the pattern of wave reflection. The lines (30) indicate the crests on idealized upright waves, which run against the plant at an ideal direction, parallel to the plant's symmetry axis. The dotted lines are radii from a point (33) to a wave reflector (2), whose sides create a section of a circular-ring with center in point (33). The arrows (32) indicate the direction in which the waves move. The arrow points indicate where the wave crests hit a wave reflector at a given point in time and where later the same wave crests hit 1/3 and 2/3 respectively of the wave period.

In the case of an ideal reflection, the direction of the reflected waves is found by mirroring the entrance direction in the respective circle radius, since the entry angle and the exit angle are identical. The direction in which the reflected waves move, is marked by the lines (32). The arrow points indicate where the reflected waves reach the front of the ramp of the platform. The reflected crests (32) are seen clearest by the right wave reflector. The crest that has just reached the ramp is crossed by a reflected crest from a former wave, having just reached the ramp. The cross point is marked with a circle.

The wave reflection pattern indicates that a wave reflector with a constant curve causes the reflected waves to cross each other. In this way, local crests arise which are essentially higher than the undisturbed wave heights. In reality, however, the reflected energy will be dissipated through non-linear wave interaction between incoming and reflected waves. Also the so called Macheffect will cause an increasing wave height of waves traveling alongside the wave reflector. Never the less, the reflection pattern gives a good picture of how the waves move. It is furthermore clear, that none of the reflected waves are able to cross the symmetry axis of the plant. In this way, interaction between the reflected waves from the two wave reflectors is avoided, with lower strain on the platform's front as a result.

The dimensions of the wave power plant in the preferred embodiment are selected proportionate to the illustrated prevailing wave lengths in such a fashion that there are direct or reflected wave crests constantly going up the ramp. The undisturbed waves hit the middle of the ramp first, while the reflected waves hit the ramp near the side pontoons and from here move obliquely up the ramp towards the middle of the plant. A steady stream of sea water into the basin is achieved on account of the curved shape of the ramp and the wave reflectors. At the same time, the stability of the platform in roll/pitch is greater than that of barges, pontoon bridges and the like, which lie across the waves and have the same width as the platform. A high degree of stability of the platform also gives a proportionate high degree of efficiency in the use of wave energy. This is why the proportions of the plant must be adapted to local wave climate. The preferred embodiment estimates a opening width of approximately 160 meters between the wave reflectors and a maximum water pressure for the turbines of approximately 4 meter. Such a plant fits the wave climate existing in the Danish part of the North Sea.

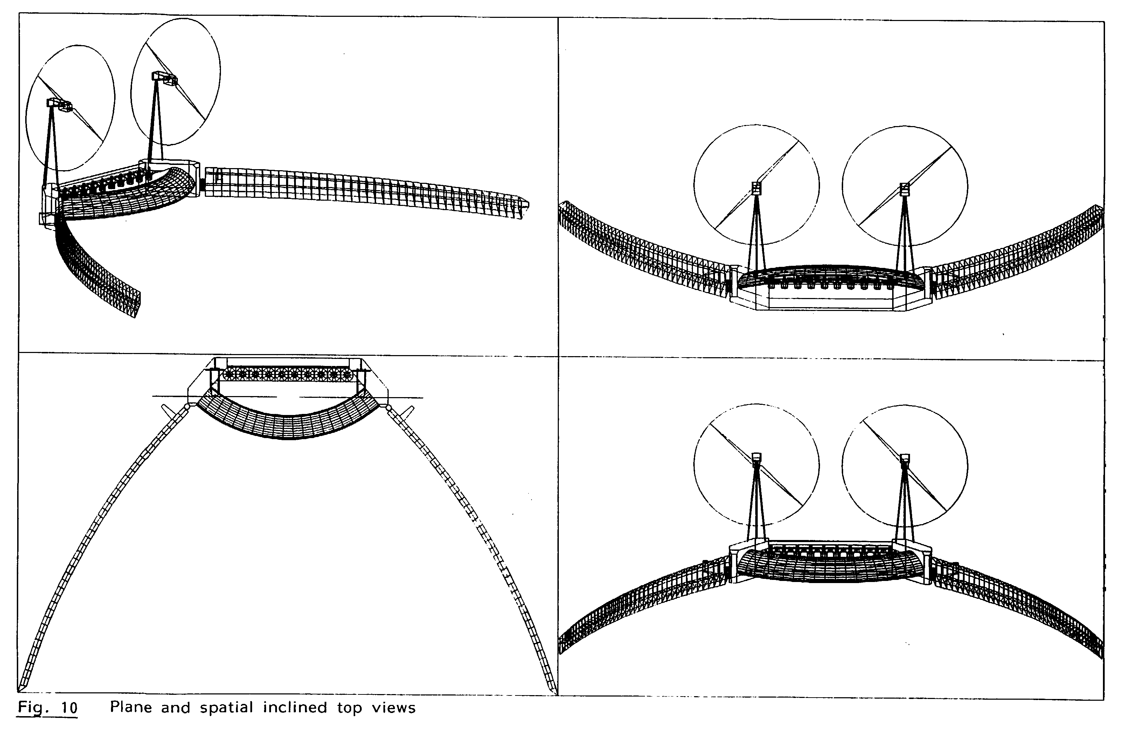

Fig. 10 shows the entire plant with wave reflectors and wind mills. The type of windmill illustrated here has wings placed in front of the tower, but can also be the down-wind type, i.e. a type with a self-stabilizing rotor placed behind the tower, as seen from the wind's direction. A windmill of the down-wind type has a rotor plane placed further back on the ramp of the platform, reducing the risk of spray on the wings.

In the spatial drawings, all construction lines are shown, i.e. the "hidden lines" have not been removed.

## Claims

1. Plant for exploiting wind/wave energy on the high seas consisting of a floating, self-adjusting towards the waves, platform (1) with hawsers connected to a floating anchor pontoon (3), through which a pipe or power cable possibly can be led and which in its turn is moored to one or more anchor blocks (4) on the sea floor; two floating internally mirrored wave-reflectors (2) fixed to the platform for deflection and focusing of waves towards a ramp (13), said ramp on which waves can travel and spill over into a basin (14) which has a variable water level relative to the mean sea level and from which the water once again is led back to the sea through pipes in which power transforming machinery (10) is installed, said plant characterized by the ramp (13) having a doubly curved surface with a property such that all curves produced by cutting the surface of the ramp with horizontal planes, have a convex form facing the sea between the wave reflectors, and that curves produced by cutting the surface of the ramp with vertical planes through the anchor pontoon (3) are downwards hollow.

2. Plant according to claim 1, characterized by the horizontal curves of the ramp (13) and/or the curves of the largest fall on the ramp are parts of conic sections.

3. Plant according to claim 1, characterized by the ramp (13) being constructed by joining together a relatively large number of exactly alike sections each of which designed as single curved surfaces.

4. Plant according to claim 1, characterized by the ballast tanks (15) being divided in cells by means of bulkheads (17) and ribs (20), and by the bottom plates being perforated whereby the floating height of the platform and the inclination of the ramp (13) can be regulated by changing the air pressure in the ballast tanks, which at the same time reduces the forces acting upon the ramp (13) and other parts of the platform due to the in concordance with an increased wave height likewise increased internal pressure in the construction.

5. Plant according to claim 1, characterized by the anchor block (4) and/or the anchor pontoon (3) being equipped with detectors for registration of heights, frequencies and speed of the incoming waves and a corresponding automation for adjusting the air pressure in the ballast tanks (15) and the numbers and/or effects of the power converting machines in operation on the platform whereby the efficiency of the plant can be optimized with respect to the actual wave climate.

6. Plant according to claim 1, characterized by the two internally mirrored wave-reflectors (2) for deflection and focusing of waves each being designed as a floating stiff, curved and thereby self-stabilizing pontoon of considerable length with regards to the width and height of any cross section, said wave reflector in a horizontal plane as a whole or in sections is part of a conic section, said wave reflector's front is vertical and of an ever increasing height over the water line in direction towards the platform (1).

7. Plant according to claim 1, characterized by the side pontoons (18) on the side facing the incoming waves being equipped with a fender arrangement consisting of one or more vertical braces in almost the entire height of the pontoon (7), around which a fender element of an elastic material is mounted in such a way that the wave reflector (2) can be kept in a constant distance to the pontoon without giving rise to exchanging of vertical forces with the platform at any floating height of the platform.

8. Plant according to claim 1, characterized by the platform (1) being equipped with machinery for positioning the wave reflectors (2), which is obtained by varying the pull in the hawsers (6) connecting the wave reflectors and at the same time hall in or slacking the hawsers (9), which by means of moment-arms (8) on the wave reflectors prevent the wave reflectors from moving against each other as a result of forces acting on the rear side of the wave reflectors due to waves moving in another direction than the prevailing wave direction.

9. Plant according to claim 1, characterized by there being placed on top of the side-pontoons (18) two windmills (11) of a type with the rotor cardanic suspended i.e. with free yaw/tilt allowing the rotor to move freely within certain limits with regards to the windmill tower.

## Patentansprüche

1. Anlage für Gewinnung von Wind-/Wellenenergie auf offener See, aus einer schwimmenden Plattform (1) bestehend, mit selbstjustierender Verankerung gemäss Wellenrichtung mit Trossen an einen schwimmenden Ankerponton (3) verkabelt, durch denjenigen ein eventuelles Rohr oder eine Stromleitung geführt werden kann. Der Ponton ist einem oder mehreren Ankerblöcken (4) am Meeresboden verankert. Zwei schwimmende intern gespiegelte Wellenreflektoren (2) sind auf der Plattform für Deflektion und Fokussierung der Wellen gegen eine Rampe (13) verbunden, über diejenige sich Wellen bewegen können, und in eines Becken (14) geleitet werden können. Das Becken hat ein variables Wassserniveau, und das Wasser wird nochmals in die Meer geleitet, u.z. durch Röhre, in denjenigen kraftüberführende Maschinen (10) installiert worden sind. Die Anlage ist durch eine Rampe (13) charakterisiert, die eine dobbelt gekurvte Oberfläche, u.z. mit einer Eigenschaft, damit alle Kurven, die durch Schneidung der Oberfläche der Rampe mit horizontalen Stufen ein konvexer Form wärtz der See zwischen den Wellenreflektoren, haben, und damit Kurven, die durch Schneidung der Rampe mit vertikalen Stufen durch den Ankerponton (3) abwärtz hohl sind.

2. Anlage gemäss Patentanspruch 1, durch die horizontalen Kurven der Rampe (13) und/oder die Kurven des grössten Gefälles auf der Rampe charakterisiert, u.z. als Teil eines Kegelschnittes.

3. Anlage gemäss Patentanspruch 1, dadurch charakterisiert, dass die Rampe (13) aus einer verhältnismässig grossen Anzahl Sektionen besteht, die alle für sich als einzelgekrümmte Oberflächen ausgeformt sind.

4. Anlage gemäss Patentanspruch 1, dadurch charakterisiert, dass die Ballasttanks (15) in Zellen durch Schotten (17) und Rippen (20) aufgeteilt sind, und dadurch dass die Grundplatten gelocht sind, wodurch die Schwimmhöhe der Plattform und die Krümmung der Rampe (13) durch Änderung des Luftdruckes in den Ballasttanks reguliert werden können. In dieser Weise werden auch die Kräfte reduziert, die auf der Rampe (13) und anderen Teilen der Plattform tätig sind, u.z. wegen einer erhöhten Wellenhöhe und eines internen Druckes in der Konstruktion.

5. Anlage gemäss Patenanspruch 1, dadurch charakterisiert, dass der Ankerblock (4) und/oder der Ankerschwimmkörper (3) mit Detektoren für Registrierung von Höhen, Frequenzen und Geschwindigkeit der einkommenden Wellen ausgestattet sind, und gleichzeitig einer entsprechenden Automation für die Regulierung des Luftdruckes in den Ballasttanks (15) und der Anzahl und/oder der Effekte der Kraftumformermaschinen, die auf dem Plattform tätig sind, wodurch die Leistungsfähigkeit der Anlage mit Bezug auf das aktuelle Wellenklima optimiert werden kann.

6. Anlage gemäss Patentanspruch 1, durch die beiden intern gespiegelten Wellenreflektoren (2) charakterisiert, u.z. für Deflektion und Fokussierung der Wellen, jeder für sich als einen schwimmenden Schwimmkörper ausgeformt, u.z. gebogen und dadurch selbststabilizierend. Der Schwimmkörper hat eine erhebliche Lenge mit Bezug auf die Breite und die Höhe jeder Kreuzsektion. Der Wellenreflektor ist in horizontalem Plan als ein Ganzes oder in Sektionen ein Teil einer konischen Sektion. Die Front des Wellenreflektors ist vertikal und von einer immer steigenden Höhe über der Wasserlinie in Richtung der Plattform (1).

7. Anlage gemäss Patentanspruch 1, dadurch charakterisiert, dass die Seitenschwimmkörper (18) der Seite, die in Richtung einkommende Wellen liegt, mit einer Fenderveranstaltung ausgestattet sind, die aus einem oder mehreren vertikalen Bügeln in fast der totalen Höhe des Schwimmkörpers (7) besteht. Der Schwimmkörper ist mit einem Fenderelement in einem elastischen Material ausgestattet, u.z, so dass der Wellenreflektor (2) in einem konstanten Abstand des Schwimmkörpers festgehalten werden kann, u.z. ohne Risiko vertikaler Kräfte mit dem Plattform ungeachtet der schwimmenden Höhe der Plattform.

8. Anlage gemäss Patentanspruch 1, dadurch charakterisiert, dass die Plattform (1) mit Maschinerie für Positionierung der Wellenreflektoren (1) ausgestattet ist. Die Positionierung erfolgt dadurch, dass die Zugkraft der Trossen (6), die mit den Wellenreflaktoren verbunden sind, variiert wird, und dass gleichzeitig die Trossen (9) gezogen oder gefiert werden. Dies wird durch Gebrauch von Momenthebeln (8) auf den Wellenreflektoren verhindern, dass sich die Wellenreflektoren gegen einander bewegen, u.z. als eine Folge von Kräften, die an der Hinterseite der Wellenreflektoren tätig sind, d.h. wegen Wellen die sich in anderer Richtung denn der vorherrschenden Wellenrichtung bewegen.

9. Anlage gemäss Patentanspruch 1, dadurch charakterisiert, dass zwei Windmühlen (11) eines Typs mit dem Rotor kardanisch aufgehängt auf den Seitenschwimmkörpern (18) plaziert werden, d.h. mit freiem yaw/tilt, damit sich der Rotor frei innerhalb gewissenen Grenzen in Verhältnis zum Windmühlenturm bewegen kann.

## Revendications

1. Installation pour l'exploitation de l'énergie du vent/des vagues en haute mer, d'une plate-forme (1) flottante et autoajustante vers les vagues, avec des câbles connectés à un ponton d'ancre (3), par lequel un tuyau ou un câble électrique pourra éventuellement être conduit, et qui est mouillé à un ou plusieurs blocs d'ancre (4) au fond de la mer. Deux réflecteurs des vagues (2), flottants et internement réflessisants, fixés à la plate-forme pour déflection et mise au point des vagues vers une rampe (13), auxquels les vagues pourront parcourier et verser dans un bassin (14), qui a un niveau d'eau variable relative au niveau de la mer, et duquel de l'eau sera reversée à la mer par des tuyaux, qui sont installés avec de la machinerie (10). L'installation est caractérisée par une rampe (13), qui a une surface doublement courbée avec la propriété que toutes les courbes produites par coupant la surface de la rampe avec des plans horizontaux ont une forme convexe orientée vers la mer entre les réflecteurs des vagues, et que les courbes produites par coupant la surface de la rampe avec des planes verticaux par le ponton d'ancre (3) sont caves vers le bas.

2. Installation selon brevet 1, caractérisée par les courbes horizontaux de la rampe (13), et/ou par les courbes de la chute plus grande sur la rampe étantes parts des sections coniques.

3. Installation selon brevet 1, caractérisée par la rampe (13) étante construite par connexion d'un relativement grand nombre des sections completement identiques, chaqune désignée comme une seule surface courbée.

4. Installation selon brevet 1, caractérisée par des réservoirs de lest (15) étants dividés en des cellulles au moyen des cloisons (17) et des côtes (20), et par les plaques en bas étantes perforées, avec la conséquence que l'hauteur flottante de la plate-forme et l'inclination de la rampe (13) pourront être régulées par changement de la pression d'air des réservoirs de lest. En même temps on obtient une réduction des forces actantes sur la rampe (13) et sur des autres parts de la plate-forme conformément à une hauteur des vagues, élevée et une pression interne élevée de la construction.

5. Installation selon brevet 1, caracterisée par le bloc d'ancre (4) et/ou le ponton d'ancre (3) étant fourni avec des détecteurs pour la régistration des hauteurs, des fréquences et de la vitesse des vagues entrantes et par une automation correspondante pour l'ajustage de la pression d'air dans les réservoirs de lest (15) et le nombre et/ou les effets des convertisseurs électriques en opération sur la plate-forme, par lesquels le rendement de l'installation pourra être optimé conformement au climat réel des vagues.

6. Installation selon brevet 1, caractérisée par les deux réflecteurs des vagues (2), internement réflessisants, pour la déflection et la mise au point des vagues chaqune étante désignée comme un ponton flottant et courbé et de cette façon étant autostabilisant, et d'une longueur considerable quant à la largeur et l'hauteur de toutes contre-sections. Le réflecteur des vagues, au plan horizontal comme une unité ou en sections, forme part d'une section conique. Le front du réflecteur des vagues est vertical avec une hauteur toujours élévante par-dessus la surface de la mer avec direction vers la plate-forme (1).

7. Installation selon brevet 1, caractérisée par les pontons latéraux (18) étants face à face aux vagues entrantes. Ils sont fournis avec un àrrangement des bourrelets consistant d'un ou plusieurs liens verticaux d'une hauteur presque équivalente à l'hauteur totale du ponton (7), autour duquel on a installé un élement des bourrelets d'une matière elastique, cela pour obtenir que les réflecteurs des vagues (2) seront maintenus d'une distance constante du ponton sans donnant cas à échangement des forces verticaux à la plate-forme quel que soit la hauteur de la plate-forme.

8. Installation selon brevet 1, caracterisée par la plate-forme (1) étante fournie avec de la machinerie pour la mise en place des réflecteurs des vagues (2). Cela sera obtenu par diversification du tirage des câbles (6) qui connectent les réflecteurs des vagues, au même temps tirant ou filant les câbles (9), qui au moyen des bras spéciaux (8) aux réflecteurs des vagues préventent que les réflecteurs des vagues se bougent contre l'un à l'autre par suite des forces opérantes au côté de derrière des réflecteurs des vagues, cela causé par des vagues bougeantes en direction d'autre que la direction prédominante des vagues.

9. Installation selon brevet 1, caractérisée par placement au-dessus les pontons latéraux (18) de deux moulins à vent (11) d'un type avec le rotor étant suspendu à un joint à cardan, cela veut dire avec libre yaw/tilt qui permet que le rotor se bouge librement entre des certaines limitations par rapport à la tour du moulin à vent.
